# EUROPÄISCHE PATENTANMELDUNG

(11) **EP 0 831 288 A2**
(43) Veröffentlichungstag der Anmeldung: **25.03.1998**
(21) Anmeldenummer: 97111830.2
(22) Anmeldetag: 11.07.1997
(51) Int. Cl.: F28D 5/00, F28F 9/00, C02F 1/04

(54) **Verfahren zum Eindampfen von wässrigen Salzlösungen**

(30) Priorität: 11.07.1996 DE 19628009
(71) Anmelder: BASF AKTIENGESELLSCHAFT, 67056 Ludwigshafen (DE)
(72) Erfinder: Jäger, Michael, 69514 Laudenbach (DE); Grimmer, Karl, 67105 Schifferstadt (DE); Rottensteiner, Alexander, 67059 Ludwigshafen (DE); Nitzschmann, Robert, Dr., 67227 Frankenthal (DE); Purucker, Bernard, Dr., 67069 Ludwigshafen (DE)
(74) Vertreter: Isenbruck, Günter, Dr.

(57) **Zusammenfassung**

In dem Verfahren zum Eindampfen von wäßrigen Salzlösungen (2, 3), vorzugsweise von sauren Salzlösungen, die bei der Herstellung von Mineraldüngergranulaten entstehen, werden als Wärmetauscher Plattenwärmetauscher (1, 1A/B) eingesetzt, und die Lösungen (2) durch in getrennten Strömungswegen geführten Dampf (4, 5) erhitzt.

## Beschreibung

Die Erfindung betrifft ein Verfahren zum Eindampfen von wäßrigen Salzlösungen, vorzugsweise von sauren Salzlösungen, die bei der Herstellung von Mineraldüngergranulaten entstehen, in einem Wärmetauscher, in dem die Lösungen durch in getrennten Strömungswegen geführten Dampf erhitzt werden.

Derartige wäßrige saure Salzlösungen, die auch als Maischen bezeichnet werden, entstehen z.B. bei der Herstellung von Mineraldüngergranulaten, beispielsweise Granulaten aus Nitrophosphat (NP), Nitrophosphat-Kalium (NPK), Kalkammonsalpeter (KAS), Ammonsulfatsalpeter (ASS) und dergleichen. Diese Salzlösungen enthalten je nach der Art des Düngemittels im wesentlichen unterschiedliche Mengen Ammonium-, Alkali- und Erdalkaliphosphate, -carbonate, -nitrate und/oder -sulfate. Mittels Eindampfung wird dann der Wassergehalt dieser Salzlösungen soweit reduziert, daß die Maische in der nachfolgenden Granulation kristallisiert und in Granulate geformt werden kann. Die Maische hat nach der Eindampfung in der Regel noch einen Wassergehalt von 13 bis 6 Gew.-%, einen Siedepunkt von 115 bis 145 °C und einen pH-Wert von 4 bis 5,5.

Bisher werden zur Eindampfung der Maischen regelmäßig Rohrbündel-Wärmeübertrager verwendet, die mit Dampf beheizt werden und durch deren Rohre die Maische gepumpt wird. In einem nachfolgenden Behälter wird das verdampfte Wasser abgetrennt. Diese Art der Verdampfung wird als Zwangsumlaufverdampfung bezeichnet.

Die Maische neigt wegen ihrer hohen Salzkonzentration stark zur Krustenbildung an den Innenwandungen der Rohre, durch die sie geführt wird. Die Verdampfer können daher nur so lange betrieben werden, bis keine nennenswerte Verdampfung mehr möglich ist. Dies ist in der Regel nach ca. 1 Woche der Fall. Dann muß auf einen Ersatzverdampfer umgeschaltet werden. Es hat sich gezeigt, daß zu diesem Zeitpunkt 60 bis 80% der Rohre vollständig verstopft und mit kompakt kristallisierter Salzmischung gefüllt sind.

Die Reinigung des verstopften Verdampfers erfolgt dann in mehreren Schritten. Er muß zunächst entleert und abgekühlt werden, was ca. 1 Stunde in Anspruch nimmt. Danach muß er geöffnet werden, und es erfolgt eine mechanische Vorreinigung durch Durchbohren der verstopften Rohre mit Hochdruckwasser. Dabei wird mit einer Lanze ein Wasserstrahl mit einem Druck von mehreren hundert bar durch die Rohre gebohrt. Dies ist erforderlich, um bei einer anschließenden chemischen Reinigung die Rohre durchströmen und die Beläge auflösen zu können. Hierfür werden etwa 8 bis 12 Stunden benötigt. Danach wird der Verdampfer wieder geschlossen, und es wird eine chemische Reinigung mit Salpetersäure durchgeführt. Während der Auflösung der Krusten muß wieder Wärme zugeführt und die Säure auf etwa 70 °C erhitzt werden. Hierfür sind ca. 6 bis 8 Stunden erforderlich. Danach erfolgt die Entleerung und das erneute Anfahren des Verdampfers mit Maische, was ca. 1 Stunde in Anspruch nimmt. Die vorgenannten Maßnahmen bedingen eine Gesamtausfallzeit vom Abstellen bis zum Wiedererreichen des Sollbetriebs von 20 bis 24 Stunden, je nach dem Grad der Verschmutzung. Dieser hohe Reinigungsaufwand ist sehr unbefriedigend, wurde aber mangels Alternativen bisher in Kauf genommen.

Für den Wärmeaustausch zwischen verschiedenen Medien sind auch Platten-Wärmetauscher bekannt, bei denen man im wesentlichen zwei Bauarten unterscheidet. Die eine Bauart besteht aus Einzelplatten, die in Paketen gestapelt und über Haltevorrichtungen zusammengepreßt sind. Dabei sind die Platten gegeneinander und gegen die Umgebung mit Dichtungen abgedichtet. Die Platten sind einer mechanischen Reinigung zugänglich, indem man den Wärmetauscher in seine Elemente zerlegt. Dies ist sehr aufwendig. Die andere Ausbildungsform von Platten-Wärmetauschern besteht aus Einzelblechen, die miteinander unlösbar verschweißt sind. Diese auch Thermo-Blech-Wärmetauscher genannten Apparate sind mehrfach in der Literatur beschrieben worden (siehe u.a. Thermo-Blech-Wärmeaustauscher in der thermischen Verfahrenstechnik, Verfahrenstechnik 22 (12), 1988, S. 14 - 15). Diese Art von Platten-Wärmetauschern wurde bisher nur eingesetzt, wenn eine Verstopfung ausgeschlossen ist, da sie nur eingeschränkt einer mechanischen Reinigung zugänglich ist. Das zwischen den geschweißten Platten geführte Medium muß verschmutzungsfrei sein, da die Zwischenräume nicht mechanisch gereinigt werden können. Allgemein werden Platten-Wärmetauscher bisher nur in Medien eingesetzt, die nicht zur Verschmutzung neigen, also beispielsweise für die Wärmeübertragung zwischen reinen Substanzen oder solchen, bei denen keinerlei Abscheidungen auftreten können.

Der Erfindung liegt die Aufgabe zugrunde, bei der Eindampfung von wäßrigen Salzlösungen, wie sie z.B. bei der Herstellung von Granulaten aus Mineraldünger entstehen, die durch einen hohen Reinigungsaufwand bedingten Ausfallzeiten erheblich zu reduzieren und damit eine höhere Verfügbarkeit der Anlagen herbeizuführen.

Erfindungsgemäß wird dies dadurch erreicht, daß als Wärmetauscher Platten-Wärmetauscher eingesetzt werden. Gemäß einer besonders vorteilhaften Ausbildung der Erfindung werden Platten-Wärmetauscher der Bauart Thermo-Blech verwendet, deren Platten aus je 2 Blechen bestehen, die punktuell zusammengeschweißt sind und die zwischen den Schweißpunkten Abstände aufweisen, die als Blechkissen bezeichnet werden können. Die Platten sind am Rande durch Abstandshalter voneinander getrennt. Überraschenderweise hat sich gezeigt, daß bei Durchführung des erfindungsgemäßen Verfahrens keine mechanische Reinigung erforderlich ist. Es entfallt daher das zeitaufwendige Abkühlen, das Öffnen, das Durchbohren der Ablagerungen mit Hochdruckwasserlanzen und das erneute Schließen des Wärmetauschers. Gemäß einer vorteilhaften Ausbildung der Erfindung beträgt der kleinste Abstand der Platten 10 bis 30 mm, vorzugsweise 15 bis 25 mm. Der größte lichte Abstand der Bleche in den Platten beträgt 5 bis 15 mm, vorzugsweise 6 bis 10 mm. Die Stärke der Platten beträgt 1 bis 3 mm, vorzugsweise etwa 2 mm. Der Abstand der Punktschweißungen der Bleche einer Platte beträgt 75 bis 200 mm, vorzugsweise 90 bis 110 mm.

Bei der praktischen Durchführung von Versuchen wurden Platten-Wärmetauscher der Firma DEG Engineering GmbH eingesetzt, die als Thermoblech-Wärmetauscher bezeichnet werden. Die Platten bestehen dabei aus punktuell zusammengeschweißten Blechen und sind nicht zerlegbar. Solche Wärmetauscher haben den besonderen Vorteil, daß ein Minimum an Dichtungsflächen und damit an Leckagemöglichkeiten besteht.

Weitere Einzelheiten und Vorteile der Erfindung können den anhand der Zeichnung bescbriebenen Ausführungsbeispielen entnommen werden. Es zeigen:
- Fig. 1: eine schematische Ansicht eines Wärmetauschers nach dem Prinzip THERMOBLECH,
- Fig. 2: eine perspektivische Darstellung des inneren Aufbaus des Wärmetauschers nach Fig. 1,
- Fig. 3: die für die Durchführung der Versuche eingesetzte Versuchsanordnung.

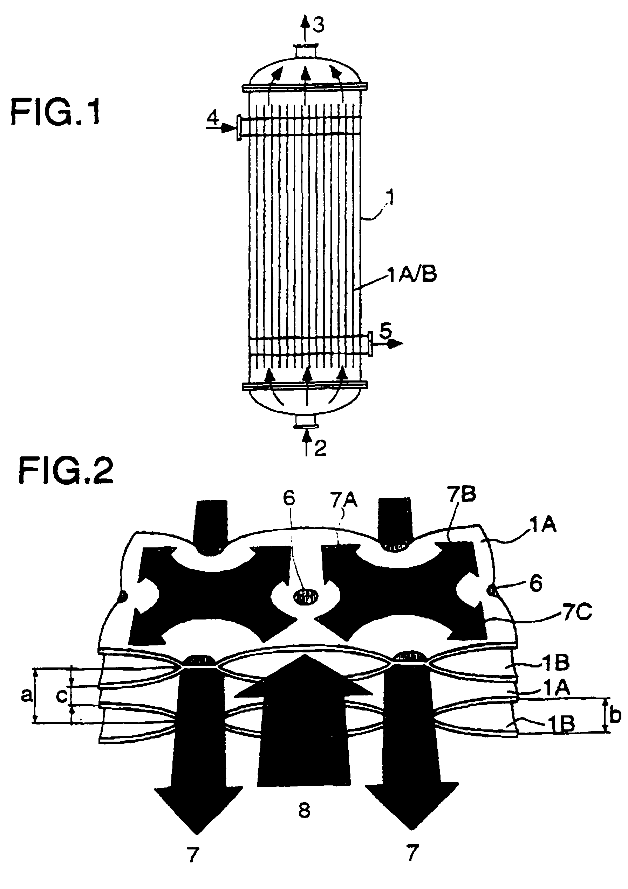

Der in Fig. 1 dargestellte Kompakt-Wärmetauscher des Typs THERMOBLECH hat eine spezielle Kissenstruktur, die in Fig. 2 perspektivisch und in vergrößertem Maßstab dargestellt ist. Die Platten dieses Wärmetauschers 1 sind schematisch als parallele Platten gezeichnet, die je aus Blechen 1A und 1B bestehen, wie dies der Fig. 2 zu entnehmen ist. Durch die Leitung 2 fließt die einzudampfende Maische in den Wärmeaustauscher 1 und verläßt diesen nach starker Reduktion ihres Wassergehalts durch Leitung 3. Die Eindampfung wird erzielt durch heißen Wasserdampf, der durch die Leitung 4 zu- und durch die Leitung 5 als Kondensat abströmt.

Wie der Figur 2 zu entnehmen ist, besteht der Wärmetauscher 1 aus Platten, die aus Blechen 1A und 1B bestehen, welche durch punktuelle Verschweißung an den Stellen 6 miteinander verbunden sind. Die Platten sind am Rande durch Abstandshalter in ihrer Lage befestigt. Durch diese Anordnung entstehen Strömungswege 7 und 8. Diese spalten sich in der in Fig. 2 mit den Bezeichnungen 7A, 7B, 7C bezeichneten Weise auf. Der Abstand der Plattenmitten ist mit a, der Kleinste freie Abstand zwischen zwei Platten ist mit c und der größte lichte Abstand zwischen den Blechen 1A, 1B ist mit b bezeichnet. Bei dieser Art von Wärmetauschern mit den genannten Abmessungen sind bis zu 350 m² Wärmeübertragungsfläche pro m³ Wärmetauschervolumen möglich. Gegenüber einem Rohrbündel-Wärmetauscher mit identischem Mantelrohrmaß ergibt sich hier eine Mehrfläche von etwa 40%.

Der Versuchs-Wärmetauscher verfügt über eine Randgängigkeit von etwa 40 mm.

Versuche mit einem Wärmetauscher 1 der Bauart THERMOBLECH mit einer Wärmeübertragungsfläche von 4,5 m² wurden im Vergleich zu einem Rohrbündel-Wärmetauscher 10 mit einer Wärmetauschfläche von 64 m² unter gleichen Bedingungen durchgeführt.

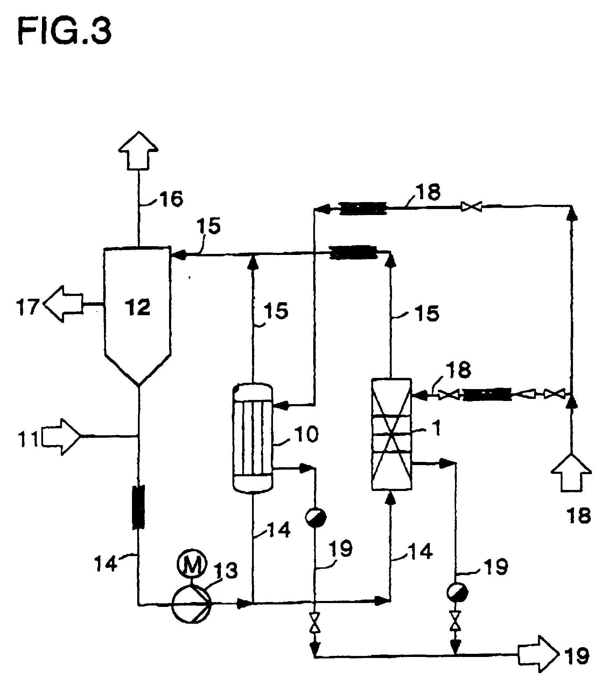

Die Versuchsanordnung ist der Fig. 3 zu entnehmen. Hier strömt die bei der Herstellung des Mineraldüngemittels entstehende Maische entweder direkt oder nach Durchlaufen einer Stufe wie der nachstehend beschriebenen über eine Leitung 11 in die Leitung 14, von wo sie mittels einer Pumpe 13 durch Leitung 14 gepumpt und den parallel geschalteten Wärmetauschern 10 und 1 getrennt zugeführt wird. Der Wärmetauscher 10 ist ein Rohrbündel-Wärmetauscher, der Wärmetauscher 1 ist ein Thermoblech-Wärmetauscher. Vom oberen Ende dieser Wärmetauscher strömt die heiße und teilweise verdampfte Maische über die Leitungen 15 in den oberen Teil des Behälters 12 zurück, aus dem dampfförmige Brüden durch Leitung 16 abziehen. Die eingedampfte Maische wird durch Leitung 17 der nächsten Stufe des Verfahrens zugeführt, wo sie entweder weiter eingedampft oder zur Herstellung ihrer körnigen Endform bearbeitet wird. Der zur Erhitzung der Maische erforderliche Dampf wird durch Leitung 18 den beiden Wärmetauschern 1 und 10 zugeführt und das Kondensat durch Leitung 19 abgeführt.

In einer Versuchsanlage hatten die beiden Wärmetauscher 1 und 10 folgende Abmessungen:

| Rohrbündel-Wärmetauscher 10 | |
|---|---|
| Manteldurchmesser | 900 mm |
| Rohrlänge | 2500 mm |
| Rohraußendurchmesser x Wandstärke | 44,5 mm x 2,9 mm |
| Zahl der Rohre: | 211 |
| Wärmeübertragungsfläche (berechnet auf Rohrinnenfläche) | 64 m² |

| Thermoblech-Wärmetauscher 1 | |
|---|---|
| Rechteckiger Mantelquerschnitt | 490 mm x 325 mm |
| Mantellänge | 1000 mm |
| Platten (1 Platte entspricht 2 punktuell geschweißten Blechen) | 800 mm x 350 mm |
| Zahl der Platten | 8 |
| Abstand der Plattenmitten (a) | 25 mm |
| Kleinster lichter Abstand zwischen Platten (c) | 15 mm |
| Größter lichter Abstand in den Platten (b) (Blechkissen) | 6 mm |
| Wärmeübertragungsfläche | 4,48 m² |
| Abstand zwischen Schweißpunkten | 100 mm |

Der Plattentauscher 10 war aus dem Werkstoff 1.4404 gefertigt. Die Stärke der Bleche betrug vorsorglich für den Fall einer notwendigen mechanischen Reinigung 2 mm. Da das erfindungsgemäße Verfahren dies nicht erforderlich machte, hätte eine Blechstärke von 1 mm ausgereicht.

Die mit einer solchen Anlage erzielten Versuchsergebnisse beim Eindampfen einer Maische aus Nitrophosphatkalium (NPK) sind den folgenden Tabellen zu entnehmen. In diesen steht die Kurzbezeichnung RB für Rohrbündel-Wärmetauscher (10) und PL für Platten-Wärmetauscher (1).

### Beispiel 1

| **Betriebstag** | **Produkt** | **Maische durchsatz m**^{**3**}**/h** | **Heizdampfdruck RB bar** | **Heizdampfmenge RB t/h** | **Heizdampfdruck PL bar** | **Heizdampfmenge PL t/h** |
|---|---|---|---|---|---|---|
| Anfahren | NPK 13+13+21 | 22 | 3,8 | 3,8 | 4,3 | 0,135 |
| 1 | NPK 13+13+21 | 18 | 3,8 | 3,2 | 4,1 | 0,13 |
| 2 | NPK 12+12+17 | 38 | 3,8 | 3 | 4,1 | 0,123 |
| 3 | NPK 12+12+17 | 20 | 3,8 | 2,5 | 4,1 | 0,079 |
| 4 | NPK 12+12+17 | 27 | 3,8 | 2,8 | 4 | 0,066 |
| 5 | NPK 12+12+17 | 20 | 3,8 | 2 | 4,2 | 0,045 |
| 6 Abstellung | NPK 12+12+17 | 23 | 3,7 | 1,1 | 4,1 | 0,018 |

Nach 6 Betriebstagen wurde die Eindampfung wegen ungenügender Leistung abgeschaltet. Im Rohrbündelapparat (RB) waren etwa 170 von 211 Rohren vollständig verstopft. Es erfolgte die übliche mechanische Reinigung mit Hochdruckwasserlanzen.

Der Plattenapparat (PL) zeigte zwar ebenfalls starke Krustenbeläge auf den Flächen. Er wurde aber nur chemisch 6 Stunden lang mit Salpetersäure beaufschlagt. Nach erneuter Sichtprüfung waren die Oberflächen blank und frei von Belägen. Dies zeigt, daß trotz der starken Verkrustung noch freie Strömungskanäle für die Spülsäure vorhanden waren, die einen Angriff der Säure möglich machten.

### Beispiel 2 (Extremversuch)

Hier wurde die gleiche Apparatur wie in Beispiel 1 eingesetzt.

| **Betriebstag** | **Produkt** | **Maische durchsatz m**^{**3**}**/h** | **Heizdampfdruck RB bar** | **Heizdampfmenge RB t/h** | **Heizdampfdruck PL bar** | **Heizdampfmenge PL t/h** |
|---|---|---|---|---|---|---|
| Anfahren | NPK 14+10+20 | 18 | 3,6 | 2 | 4,5 | 0,198 |
| 1 | NPK 14+10+20 | 18 | 3,8 | 1,9 | 4,4 | 0,18 |
| 2 | NPK 13+13+21 | 23 | 3,5 | 1,5 | 4,5 | 0,171 |
| 3 | NPK 13+13+21 | 28 | 3 | 1 | 4,4 | 0,122 |
| 4 | NPK 13+13+21 | 25 | 3,3 | 0,7 | 4,7 | 0,068 |
| 5 | NPK 13+13+21 | 26 | 3,5 | 0,4 | 4,5 | 0,04 |
| 6 | NPK 13+13+21 | 25 | 3,8 | 0,3 | 4,5 | 0,03 |
| 7 | NPK 13+13+21 | 36 | 4,2 | 0,3 | 4,5 | 0,029 |
| 8 | NPK 13+13+21 | 15 | 4,7 | 0,2 | 4,5 | 0 |
| 9 Abstellung | NPK 13+13+21 | 20 | 4,8 | 0,3 | 4,5 | 0 |

Die Eindampfung wurde 9 Tage lang betrieben. Normalerweise wäre die Apparatur spätestens am 5. Betriebstag wegen ungenügender Leistung abgeschaltet worden. Im Rohrbündel-Wärmetauscher 10 waren etwa 180 von 211 Rohren vollständig verstopft. Deren Reinigung erfolgte in üblicher Weise mechanisch mit Hochdruckwasserlanzen.

Der Platten-Wärmetauscher 1 zeigte in den letzten 2 Tagen des Versuchs keine Dampfaufnahme mehr und wies starke Krustenbeläge auf den Flächen auf. Er wurde aber wieder nur chemisch 6 Stunden lang mit Salpetersäure beaufschlagt. Nach Sichtprüfüng waren die Oberflächen erneut frei von Belägen. Dies zeigt, daß auch bei einem extremen Verschmutzungsgrad noch freie Strömungskanäle für die Spülsäure vorhanden waren, die einen Angriff der Säure möglich gemacht haben.

Aus diesen Versuchen ergibt sich, daß entgegen den allgemein bestehenden Bedenken der Platten-Wärmetauscher auch bei starker Verkrustung nicht vollständig verstopft und somit in einfacher Weise durch eine chemisch wirkende Flüssigkeit (hier Salpetersäure) gereinigt werden kann. Eine zeit- und kostenaufwendige mechanische Vorreinigung kann daher entfallen. Im Gegensatz zu den bisher verwendeten Rohrbündel-Wärmetauschern bleiben bei den Platten-Wärmetauschern immer Kanäle frei, die von Säure durchströmt werden können. Daher ist eine einfache, rein chemische Reinigung möglich, und es entfallen somit die Ausfallzeiten durch Abkühlung, Öffnen, mechanischem Reinigen und Schließen des Rohrbündel-Wärmetauschers. Des weiteren sind Platten-Wärmetauscher in der Regel platzsparender bei gleicher Wärmeübertragungsleistung als Rohrbündel-Wärmetauscher, da sie kompakter gebaut sind, und günstiger in der Investition, da sie weniger Material benötigen und einfacher zu bauen sind.

Es ist davon auszugehen, daß Plattenwärmetauscher des Typs THERMOBLECH auch bei kommerziellen Anlagen unter Vergrößerung ihrer äußeren Dimensionen einsetzbar sind. Dabei kann davon ausgegangen werden, daß der Abstand der Bleche und der Platten im wesentlichen dem der Versuchsanlage entsprechen wird. Bei einer Wärmeübertragungsfläche von ca. 100 m² erscheint ein runder Wärmetauscher mit einem Manteldurchmesser von 900 mm und einer Länge von 2500 mm, analog zum bisher verwendeten Rohrbündelapparat, mit 30 Platten als geeignet.

## Patentansprüche

1. Verfahren zum Eindampfen von wäßrigen Salzlösungen, vorzugsweise von sauren Salzlösungen, die bei der Herstellung von Mineraldüngergranulaten entstehen, in einem Wärmetauscher, in dem die Lösungen durch in getrennten Strömungswegen geführten Dampf erhitzt werden, dadurch gekennzeichnet, daß als Wärmetauscher Plattenwärmetauscher eingesetzt werden.

2. Verfahren nach Anspruch 1, dadurch gekennzeichnet, daß die Platten der Plattenwärmetauscher aus je 2 Blechen bestehen, die punktuell zusammengeschweißt sind und die zwischen den Schweißpunkten Abstände aufweisen.

3. Verfahren nach Anspruch 2, dadurch gekennzeichnet, daß die Platten am Rande durch Abstandshalter voneinander getrennt sind.

4. Verfahren nach Anspruch 3, dadurch gekennzeichnet, daß der Kleinste Abstand der Platten 10 bis 30 mm, vorzugsweise 15 bis 25 mm, beträgt.

5. Verfahren nach Anspruch 3 oder 4, dadurch gekennzeichnet, daß der größte lichte Abstand der Bleche in den Platten 5 bis 15, vorzugsweise 6 bis 10 mm, beträgt.

6. Verfahren nach Anspruch 2 oder 3, dadurch gekennzeichnet, daß die Plattenstärke 1 bis 3 mm, vorzugsweise etwa 2 mm, beträgt.

7. Verfahren nach einem der Ansprüche 2 bis 6, dadurch gekennzeichnet, daß der Abstand der Punktschweißungen der Bleche einer Platte 75 bis 200 mm, Vorzugsweise 90 bis 110 mm, beträgt.
